Europäisches Patentamt

European Patent Office

Office européen des brevets

(19)

(11) **EP 0 882 974 A1**

(12) # DEMANDE DE BREVET EUROPEEN

(43) Date de publication:
09.12.1998 Bulletin 1998/50

(51) Int. Cl.$^6$: **G01N 9/28**, G01F 23/14

(21) Numéro de dépôt: 98401283.1

(22) Date de dépôt: 28.05.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 02.06.1997 FR 9706740

(71) Demandeur:
COMPAGNIE GENERALE DES MATIERES
NUCLEAIRES
F-78140 Velizy Villacoublay (FR)

(72) Inventeurs:
• Drain, Francois
78860 Saint-Nom-La-Breteche (FR)
• Gagnière, Jacques
78260 Acheres (FR)

(74) Mandataire:
Moutard, Pascal Jean et al
c/o Brevatome,
25, rue de Ponthieu
75008 Paris (FR)

(54) **Installation et procédé pour déterminer le niveau et la densité d'un liquide dans une cuvée, au moyen d'une seule canne de bullage immergée**

(57) Installation et procédé pour déterminer le niveau et la densité d'un liquide dans une cuve, au moyen d'une seule canne de bullage immergée.

Pour déterminer le niveau et la densité d'un liquide (14) contenu dans une cuve (12), on place dans cette cuve une seule canne de bullage immergée (22) terminée en partie basse par un tronçon (22a) de section élargie. Une canne de référence (16) débouche également dans le ciel de cuve (17). Dans un état initial, les deux cannes (16,22) communiquent l'une avec l'autre au travers d'une tuyauterie (28). Un transmetteur (32) ne mesure alors aucune différence de pression entre les cannes. La fermeture d'une vanne (30) dans la tuyauterie (28) permet à l'air de refouler progressivement le liquide hors de la canne de bullage (22). Le transmetteur (32) suit l'évolution de la différence de pression en fonction du temps, qui se caractérise respectivement par un point de rupture de pente et par un palier lorsque l'air arrive en haut A et en bas B du tronçon (22A). Les valeurs correspondantes de la pression mesurée permettent d'en déduire la densité, puis le niveau du liquide (14).

FIG.1

## Description

## Domaine technique

L'invention concerne une installation conçue pour déterminer le niveau et la densité d'un liquide contenu dans une cuve, grâce à des mesures de pression effectuées à l'aide d'une canne de bullage immergée dans le liquide.

L'invention concerne également un procédé de mesure mettant en oeuvre une telle installation.

L'installation et le procédé selon l'invention trouvent une application privilégiée dans l'industrie nucléaire, afin d'effectuer des mesures dans des cuves contenant des solutions radioactives.

## Etat de la technique

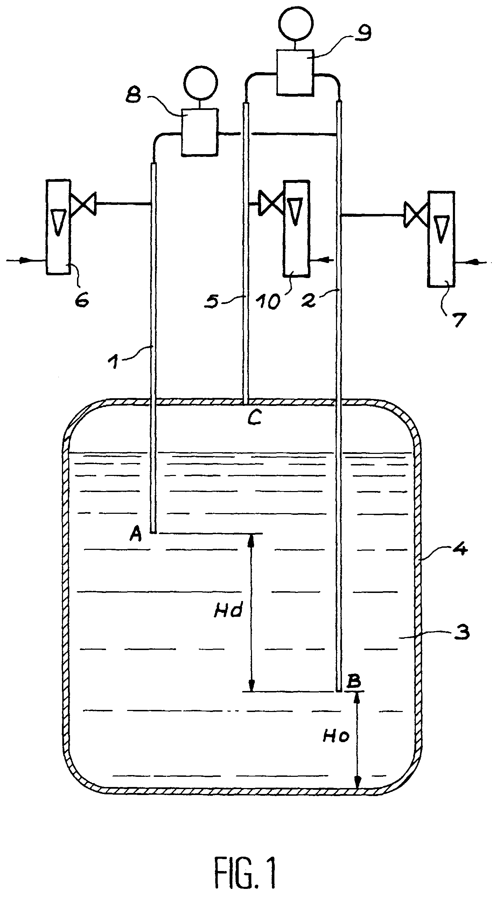

Dans l'industrie nucléaire, lorsque l'on désire connaître le niveau et la densité d'une solution radioactive contenue dans une cuve, on utilise fréquemment une installation statique telle que celle qui est illustrée schématiquement sur la figure 1 des dessins annexés.

Une telle installation comprend habituellement deux cannes de bullage immergées 1 et 2, qui plongent verticalement dans le liquide 3 contenu dans la cuve 4, de telle sorte que leurs extrémités inférieures se trouvent à des niveaux différents, séparés par une hauteur Hd. L'installation comprend en outre une canne de référence 5, qui débouche dans la cuve 4, au-dessus du niveau libre du liquide 3. Les trois cannes 1, 2 et 5 sont les seuls composants de l'installation situés à l'intérieur de la zone contaminée.

A l'extérieur de cette zone, l'installation comprend trois débitmètres 6, 7 et 10, à section variable, au travers desquels chacune des cannes de bullage 1, 2 et 5 est alimentée en air comprimé à faible débit et à une pression d'environ 1,4 bars.

L'installation comprend enfin, à l'extérieur de la zone contaminée, deux transmetteurs de pression 8 et 9, ainsi qu'un calculateur (non représenté). Le transmetteur de pression 8 mesure la différence de pression Pd entre les cannes de bullage immergées 1 et 2, alors que le transmetteur de pression 9 mesure la différence de pression Pn entre la canne de bullage immergée 2 et la canne de référence 5. Le calculateur reçoit les signaux de pression délivrés par les transmetteurs de pression 8 et 9 et calcule la densité D du liquide 3, ainsi que le niveau N de ce liquide, c'est-à-dire la hauteur de celui-ci au-dessus du fond de la cuve 4, à partir des relations suivantes :

$$D=\frac{Pd}{Hd} \text{ et}$$

$$N=\frac{Pn}{D}+Ho$$

où Ho représente la hauteur de l'extrémité basse de la canne de bullage immergée 2 au-dessus du fond de la cuve 4.

De telles installations de mesure sont utilisées couramment et fonctionnent de façon satisfaisante. Cependant, leur utilisation prolongée a fait apparaître un certain nombre d'inconvénients.

En premier lieu, la présence de deux cannes de bullage plongeant dans le liquide contenu dans la cuve pose un problème d'encombrement, du fait que l'espace interne des cuves de stockage de liquide est souvent déjà très encombré. Cette situation est particulièrement fréquente dans l'industrie nucléaire.

Par ailleurs, l'installation complète est relativement coûteuse, du fait qu'elle comprend deux cannes de bullage immergées ainsi que deux transmetteurs de pression. De plus, la multiplication des composants augmente le coût de la maintenance et le risque de contamination, dans l'industrie nucléaire.

## Exposé de l'invention

L'invention a précisément pour objet une installation et un procédé permettant de déterminer le niveau et la densité d'un liquide dans une cuve, en diminuant le nombre des équipements présents à l'intérieur de celle-ci ainsi que le nombre global des composants de l'installation, afin notamment de réduire l'encombrement de l'installation à l'intérieur de la cuve, ainsi que son coût global.

Ce résultat est obtenu au moyen d'une installation pour la détermination du niveau et de la densité d'un liquide contenu dans une cuve, caractérisée par le fait qu'elle comprend :

- une canne de référence débouchant dans la cuve, au-dessus du liquide ;
- une seule canne de bullage immergée plongeant dans la cuve pour déboucher dans le liquide par une extrémité basse et comportant au-dessus de cette extrémité basse, un tronçon immergé de section élargie, sur une hauteur donnée ;
- des moyens pour injecter de l'air comprimé dans la canne de référence et dans la canne de bullage ;
- des moyens formant vanne aptes à ouvrir et fermer une communication entre la canne de référence et la canne de bullage ; et
- des moyens de mesure d'une différence de pression entre la canne de référence et la canne de bullage.

Du fait que cette installation comprend une seule canne de bullage immergée, son encombrement à l'intérieur de la cuve est sensiblement moins important que celui d'une installation selon l'art antérieur. De plus, étant donné qu'une seule différence de pression doit être mesurée, l'installation selon l'invention utilise un seul transmetteur de pression, ce qui permet d'en réduire encore le coût.

Dans le cas où plusieurs cuves sont en équipression, l'installation peut encore être simplifiée. En effet, il est alors possible d'utiliser une seule canne de référence débouchant dans l'une des cuves pour toutes les mesures de densité et de niveau effectuées dans ces cuves. Les autres cuves ne contiennent alors qu'une canne de bullage immergée.

De préférence, les moyens formant vanne et les moyens de mesure sont commandés par des moyens de pilotage. Ces moyens de pilotage permettent d'exécuter automatiquement au moins un cycle de mesure, à partir d'un état initial dans lequel les moyens formant vanne sont fermés. Le cycle de mesure est déclenché par une ouverture des moyens formant vanne et par une mise en oeuvre des moyens de mesure, de façon à suivre l'évolution, en fonction du temps, de la différence de pression entre la canne de référence et la canne de bullage immergée.

Dans ce cas, les moyens de pilotage ramènent automatiquement l'installation dans l'état initial, après que la différence de pression ait atteint une valeur constante, et ils exécutent un nouveau cycle de mesure lorsqu'un intervalle de temps prédéterminé s'est écoulé dans cet état initial.

L'invention a aussi pour objet un procédé pour la détermination du niveau et de la densité d'un liquide contenu dans une cuve. Ce procédé comprend les étapes suivantes :

• a - mise en communication d'une canne de référence débouchant dans la cuve, au-dessus du liquide et d'une canne immergée plongeant dans la cuve pour déboucher à une hauteur Ho dans le liquide par une extrémité basse et comportant, au-dessus de cette extrémité basse, un tronçon immergé de section élargie sur une hauteur Hd donnée ;
• b - injection d'air comprimé simultanément dans la canne de référence et dans la canne de bullage et fermeture de la communication entre ces deux cannes ;
• c - mesure de l'évolution de la différence de pression entre la canne de référence et la canne de bullage, jusqu'à l'obtention d'un palier ;
• d - détermination du niveau N et de la densité D du liquide, à partir des valeurs $P_B$, $P_A$ de la différence de pression mesurée correspondant respectivement au palier et à un point de rupture de pente, à l'aide des relations :

$$D = \frac{P_B - P_A}{Hd} \text{ et}$$

$$N = \frac{P_B}{D} + Ho.$$

$P_B$ correspondant à la différence de pression mesurée entre les points B et C et $P_A$ correspondant à la différence de pression entre les points A et C.

Les étapes a, b, c et d sont renouvelées de façon cyclique lorsqu'un intervalle de temps prédéterminé (par exemple, une minute) s'est écoulé après l'obtention d'un palier.

Une analyse du signal représentatif de l'évolution de la différence de pression mesurée lors de l'étape c, c'est-à-dire lorsque le liquide descend dans la canne de bullage, permet alors de détecter une perturbation éventuelle de ce signal. Une telle perturbation, caractérisée par des irrégularités de la courbe de montée en pression, aurait pour origine des discontinuités de la section du tube résultant d'un début de cristallisation ou de dépôt dans la canne. La détection d'un début de bouchage est ainsi possible.

La détection précoce d'un début de bouchage permet d'éviter un bouchage, en rinçant la canne de bullage.

## Brève description des dessins

On décrira à présent, à titre d'exemple non limitatif, une forme de réalisation préférée de l'invention, en se référant aux dessins annexés, dans lesquels :

- la figure 1, déjà décrite, représente schématiquement une installation de l'art antérieur permettant de déterminer le niveau et la densité d'un liquide contenu dans une cuve ;
- la figure 2 est une vue analogue à la figure 1, représentant schématiquement une installation conforme à l'invention, permettant de déterminer le niveau et la densité d'un liquide contenu dans une cuve ; et
- la figure 3 est une courbe représentant l'évolution de la différence de pression entre la canne de référence et la canne immergée, en fonction du temps, lors de l'exécution d'un cycle de mesure par l'installation de la figure 2.

## Exposé détaillé d'une forme de réalisation

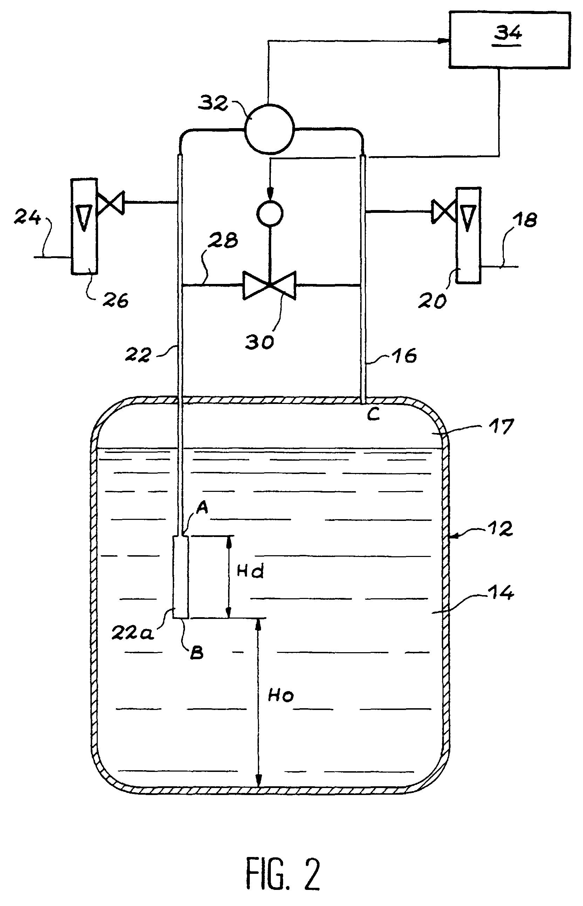

Sur la figure 2, la référence 12 désigne une cuve contenant un liquide 14 dont on désire mesurer le niveau et la densité. La cuve 12 peut notamment être une cuve de stockage utilisée dans l'industrie nucléaire. Dans ce cas, le liquide 14 est une solution radioactive et la cuve délimite une zone contaminée.

Conformément à l'invention, on détermine la densité D du liquide 14 ainsi que son niveau N à l'intérieur de la cuve 12 au moyen d'une installation originale, particulièrement simple, peu coûteuse et d'encombrement réduit.

Cette installation comprend une canne de référence 16 qui débouche dans la cuve 12, au-dessus du liquide 14. La canne de référence 16 se présente sous la forme d'un tube de section uniforme, raccordé verticalement sur la paroi supérieure de la cuve, de façon à déboucher en C dans le ciel de cuve 17 au-dessus du liquide 14. A son extrémité opposée, située à l'extérieur de la cuve 12, la canne de référence 16 est reliée à une source d'air comprimé (non représentée) par une tuyauterie 18. Un débitmètre 20 à section variable est placé dans la tuyauterie 18, afin de limiter le débit de l'air comprimé admis dans la canne de référence 16 à une valeur relativement faible (par exemple, environ 6 Nℓ/h) et à une pression d'environ 1,4 bars.

Conformément à l'invention, l'installation comprend de plus une seule canne de bullage immergée 22, qui plonge verticalement dans la cuve 12, de façon à déboucher dans le liquide 14 par son extrémité basse B. De façon plus précise, la canne de bullage immergée 22 est constituée par un tube qui présente une section uniforme sur toute sa longueur, à l'exception d'un tronçon inférieur 22a immergé, de plus grande section. Etant donné que la canne de bullage immergée 22 est verticale, la longueur du tronçon immergé 22a correspond à une hauteur Hd à l'intérieur de la cuve 12. Il est à noter que l'extrémité haute A du tronçon immergé 22a de la canne de bullage immergée 22 est placée à un niveau tel que ce tronçon 22a reste toujours totalement immergé dans le liquide 14.

A l'extérieur de la cuve 12, la canne de bullage immergée 22 est reliée à une source d'air comprimé (non représentée) par une tuyauterie 24. Un débitmètre 26 à section variable, analogue au débitmètre 20, est placé dans cette tuyauterie 24 afin de limiter le débit de l'air conprimé admis dans la canne de bullage immergée 22 à une valeur relativement faible (par exemple environ 6 Nℓ/h) et à une pression d'environ 1,4 bars.

L'installation conforme à l'invention comprend de plus, à l'extérieur de la cuve 12, une tuyauterie de dérivation 28 reliant la canne de référence 16 à la canne de bullage immergée 22. Des moyens formant vanne 30, tels qu'une électrovanne, sont placés dans cette tuyauterie de dérivation 28. Lorsque les moyens formant vanne 30 sont fermés, les cannes 16 et 22 sont isolées l'une de l'autre. Au contraire, les deux cannes communiquent entre elles lorsque les moyens formant vanne 30 sont ouverts.

L'installation conforme à l'invention comprend par ailleurs des moyens de mesure 32, également placés à l'extérieur de la cuve 12. Ces moyens de mesure 32 sont constitués par un transmetteur de pression différentielle. Ils sont interposés entre la canne de référence 16 et la canne de bullage immergée 22, de telle sorte qu'ils mesurent en temps réel la différence de pression qui existe entre ces deux cannes.

Enfin, l'installation comprend avantageusement, à l'extérieur de la cuve 12, des moyens de pilotage 34 incluant par exemple un automate et un calculateur. Ces moyens de pilotage 34 assurent la commande des moyens formant vanne 30 et des moyens de mesure 32. En outre, ils reçoivent les signaux délivrés par ces moyens de mesure 32, représentatifs de la différence de pression instantanée entre la canne de référence 16 et la canne de bullage immergée 22. Comme on l'expliquera plus en détail par la suite, les moyens de pilotage 34 permettent de commander, à intervalles réguliers, l'exécution d'un cycle de mesure.

Les avantages présentés par l'installation selon l'invention ressortent immédiatement d'une comparaison de la figure 2, représentant schématiquement cette installation, et de la figure 1, représentant schématiquement une installation de l'art antérieur.

Ainsi, on observe que l'installation selon l'invention permet de n'implanter qu'une seule canne de bullage immergée à l'intérieur de la cuve 12, au lieu de deux dans les installations existantes. L'encombrement de l'installation à l'intérieur de la cuve s'en trouve sensiblement réduit, ce qui constitue un avantage notable, en particulier dans l'industrie nucléaire, dans laquelle un grand nombre d'équipements est souvent présent à l'intérieur des cuves de stockage.

La comparaison des figures 1 et 2 montre également que l'installation selon l'invention permet de réduire sensiblement le nombre des équipements qui la constituent. Ainsi, le nombre des cannes de bullage et celui des transmetteurs de pression est diminué par deux par rapport aux installations de l'art antérieur. Le coût de l'installation s'en trouve diminué, ainsi que celui de la maintenance. En outre, le risque de contamination est réduit.

Un autre avantage de l'installation selon l'invention découle de la possibilité de piloter automatiquement les cycles de mesure, à intervalles réguliers, à l'aide des moyens de pilotage 34, de la manière qui va à présent être décrite.

Lorsque l'installation selon l'invention est mise en oeuvre, les moyens de pilotage 34 l'amènent tout d'abord dans un état initial, dans lequel de l'air comprimé à débit et à pression régulés est injecté à la fois dans la canne de référence 16 et dans la canne de bullage immergée 22, respectivement au travers des débitmètres 20 et 26. Dans cet état initial, les moyens formant vanne 30 sont ouverts, de telle sorte que les cannes 16 et 22 sont en communication mutuelle. Dans ces conditions, l'air comprimé emprunte le circuit qui offre la plus faible contre-pression, c'est-à-dire celui qui débouche dans le ciel de cuve 17 par la canne de référence 16. Il n'y a donc pas d'injection d'air comprimé dans la canne de bullage immergée 22. Les moyens de mesure 32 ne détectent alors aucune différence de pression entre les cannes 16 et 22.

Lorsqu'un cycle de mesure est déclenché, de préférence automatiquement, par les moyens de pilotage 34, les moyens formant vanne 30 sont fermés et l'injection d'air comprimé au travers des débitmètres 20 et 26 se poursuit. La canne de bullage immergée 22 est alors mise en pression et le liquide qu'elle contient est progressivement chassé.

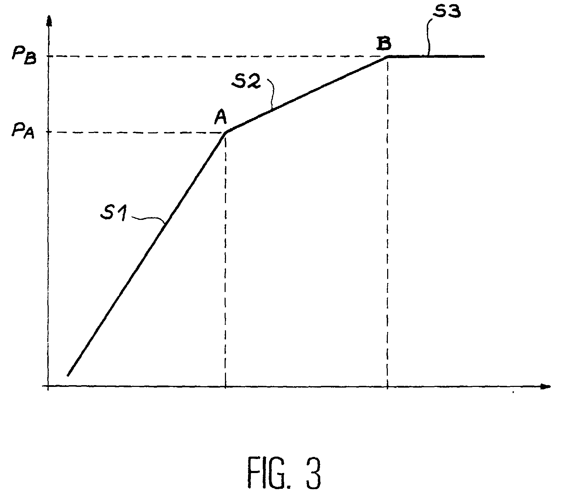

Comme l'illustre le segment S1 sur la figure 3, qui représente l'évolution en fonction du temps de la différence de pression mesurée par les moyens de mesure 32, cette différence de pression augmente tout d'abord relativement rapidement, tant que le niveau du liquide dans la canne de bullage immergée 22 reste supérieur à celui de l'extrémité haute A du tronçon immergé 22a de cette canne.

Dès que le niveau du liquide atteint cette extrémité haute A, la courbe représentative de l'évolution de la différence de pression mesurée, en fonction du temps, présente un point de rupture de pente, au-delà duquel la pente de la courbe est plus faible. Ainsi, tant que le niveau du liquide à l'intérieur de la canne de bullage immergée 22 se trouve à l'intérieur du tronçon immergé 22a de plus grande section, la différence de pression mesurée par les moyens de mesure 32 suit le segment S2 sur la figure 3.

Enfin, lorsque le liquide est totalement chassé de la canne de bullage immergée 22, la différence de pression mesurée par les moyens de mesure 32 atteint une valeur constante qui correspond au segment S3 de la courbe de la figure 3.

L'exécution de ce cycle de mesure permet ainsi de déterminer les valeurs des différences de pression $P_A$ et $P_B$ qui correspondent respectivement au franchissement de l'extrémité haute A et de l'extrémité basse B du tronçon immergé 22a de la canne de bullage immergée 22, lorsque le liquide est progressivement refoulé hors de cette canne par l'air. Sur la courbe de la figure 3, la pression $P_A$ correspond au point de rupture de pente entre les segments S1 et S2 et la pression $P_B$ correspond au palier matérialisé par le segment S3.

Lorsque ce palier est atteint, les moyens de pilotage 34 ramènent automatiquement l'installation dans son état initial, en ouvrant les moyens formant vanne 30. L'air contenu dans la canne de bullage immergée 22 est alors chassé dans le ciel de cuve 17, au travers de la tuyauterie de dérivation 28 et de la canne de référence 16.

Une nouvelle mesure peut alors être commandée par les moyens de pilotage 34, de manière à obtenir un cycle de mesures prédéterminé qui peut être, à titre d'exemple nullement limitatif, d'environ 1 min.

A la fin de chaque cycle de mesure, les moyens de pilotage 34 déterminent le niveau N et la densité D du liquide 14 contenu dans la cuve 12. Plus précisément, la densité D du liquide 14 est calculée à l'aide de la relation :

$$D = \frac{P_B - P_A}{Hd} .$$

Par ailleurs, le niveau N du liquide 14 dans la cuve 12, c'est-à-dire la hauteur de liquide au-dessus du fond de cette cuve, est calculé à partir de la relation :

$$N = \frac{P_B}{D} + Ho$$

où Ho désigne la hauteur de l'extrémité basse B du tronçon immergé 22a de la canne de bullage immergée 22, c'est-à-dire la distance qui sépare cette extrémité basse du fond de la cuve 12.

Dans l'installation qui vient d'être décrite, le liquide 14 remonte régulièrement dans la canne de bullage 22 avec une période égale, par exemple, à une minute. Cela se traduit par un effet de rinçage, mais aussi par un risque de bouchage par cristallisation ou dépôt dans la canne.

Cependant, un début de cristallisation ou de dépôt dans la canne de bullage 22 amène une perturbation du signal représentatif de l'évolution de la différence de pression mesurée lors de la descente du liquide dans la canne. En effet, la section du tube n'étant plus continue, la courbe de montée en pression présente alors des irrégularités.

Par conséquent, une analyse du signal précité permet de détecter une éventuelle perturbation de celui-ci, représentative d'un début de bouchage de la canne de bullage 22.

Dans ces conditions, c'est-à-dire lorsqu'un début de bouchage est détecté précocement, on effectue un rinçage préventif de la canne de bullage, afin d'éviter son bouchage.

Lorsque l'installation selon l'invention est utilisée dans l'industrie nucléaire, il est à noter que les moyens de mesure 32 ne risquent pas d'être contaminés par la solution radioactive contenue dans la cuve. En effet, ces moyens de mesure 32 sont isolés de l'air qui remonte de la canne 22 par l'injection d'air comprimé à faible débit et en continu faite dans chacune de ces cannes au travers des débitmètres 20 et 26.

Par ailleurs, dans le cas où l'installation conforme à l'invention est destinée à effectuer simultanément des mesures sur plusieurs cuves en équipression, c'est-à-dire dont les ciels de cuves communiquent les uns avec les autres, il est possible de simplifier encore l'installation affectée à chacune de ces cuves en utilisant une seule canne de référence 16 pour toutes les cuves. En d'autres termes, seule l'une des cuves est équipée à la fois d'une canne de référence 16 et d'une canne de bullage immergée 22, toutes les autres cuves ne comportant qu'une canne de bullage immergée.

Si l'installation conforme à l'invention est particulièrement adaptée pour être utilisée dans l'industrie nucléaire, elle peut aussi s'appliquer à d'autres industries, notamment dans tous les cas de cuves contenant des produits dangereux.

Enfin, on observera que les moyens d'injection de l'air comprimé dans les cannes, les moyens formant vanne et les moyens de mesure peuvent prendre des formes différentes de celles qui ont été décrites, sans sortir du cadre de l'invention. Dans le même esprit, les moyens de pilotage peuvent dans certains cas être supprimés ou simplifiés, certaines commandes, de même que les mesures et les calculs pouvant alors être effectués manuellement.

## Revendications

1. Installation pour la détermination du niveau et de la densité d'un liquide (14) contenu dans une cuve (12), caractérisée par le fait qu'elle comprend :

   - une canne de référence (16) débouchant dans la cuve (12), au-dessus du liquide ;
   - une seule canne de bullage immergée (22) plongeant dans la cuve pour déboucher dans le liquide par une extrémité basse et comportant au-dessus de cette extrémité basse, un tronçon immergé (22a) de section élargie, sur une hauteur (Hd) donnée ;
   - des moyens (20,26) pour injecter de l'air comprimé dans la canne de référence et dans la canne de bullage ;
   - des moyens formant vanne (30) aptes à ouvrir et fermer une communication entre la canne de référence et la canne de bullage ; et
   - des moyens de mesure (32) d'une différence de pression entre la canne de référence et la canne de bullage.

2. Installation selon la revendication 1, appliquée à la détermination du niveau et de la densité de liquides contenus dans plusieurs cuves, dans laquelle une canne de bullage (22) est placée dans chacune des cuves et une seule canne de référence (16) débouche dans l'une des cuves.

3. Installation selon l'une quelconque des revendications 1 et 2, dans laquelle la canne de bullage (22) plonge verticalement dans la cuve (12).

4. Installation selon l'une quelconque des revendications précédentes, dans laquelle les moyens formant vanne (30) et les moyens de mesure (32) sont commandés par des moyens de pilotage (34) aptes à exécuter automatiquement au moins un cycle de mesure, à partir d'un état initial dans lequel les moyens formant vanne (30) sont ouverts, consistant à commander la fermeture de ces moyens formant vanne et la mise en oeuvre des moyens de mesure (32) afin de suivre l'évolution, en fonction du temps, de la différence de pression entre la canne de référence et la canne de bullage.

5. Installation selon la revendication 4, dans laquelle les moyens de pilotage (34) ramènent automatiquement l'installation dans ledit état initial, après que ladite différence de pression ait atteint une valeur constante, et exécutent un nouveau cycle de mesure lorsqu'un intervalle de temps prédéterminé s'est écoulé dans ledit état initial.

6. Procédé pour la détermination du niveau et de la densité d'un liquide contenu dans une cuve, caractérisé par le fait qu'il comprend les étapes suivantes :

   - a - mise en communication d'une canne de référence débouchant dans la cuve, au-dessus du liquide, et d'une canne de bullage immergée plongeant dans la cuve pour débouche à une hauteur Ho dans le liquide par une extrémité basse et comportant, au-dessus de cette extrémité basse, un tronçon immergé de section élargie sur une hauteur Hd donnée ;
   - b - injection d'air comprimé simultanément dans la canne de référence et dans la canne de bullage et fermeture de la communication entre ces deux cannes ;
   - c - mesure de l'évolution de la différence de pression-entre la canne de référence et la canne de bullage, jusqu'à l'obtention d'un palier ;
   - d - détermination du niveau N et de la densité D du liquide, à partir des valeurs $P_B, P_A$ de la différence de pression mesurée correspondant respectivement au palier et à un point de rupture de pente, à l'aide des relations :

$$D = \frac{P_B - P_A}{Hd} \text{ et}$$

$$N = \frac{P_B}{D} + Ho.$$

7. Procédé selon la revendication 6, dans lequel, après l'obtention d'un palier, on met à nouveau en communication la canne de référence (16) et la canne de bullage (22) et on exécute un nouveau cycle incluant les étapes b, c et d, lorsqu'un intervalle de temps prédéterminé s'est écoulé.

8. Procédé selon la revendication 7, dans lequel on analyse un signal représentatif de l'évolution de la différence de pression mesurée lors de l'étape c, pour détecter une perturbation éventuelle de ce signal, représentative d'un début de bouchage de la canne de bullage (22).

9. Procédé selon la revendication 8, dans lequel on rince la canne de bullage (22) lorsqu'un début de bouchage est détecté.

FIG. 1

FIG. 2

FIG. 3

**Office européen des brevets**

## RAPPORT DE RECHERCHE EUROPEENNE

Numéro de la demande

EP 98 40 1283

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | EP 0 372 631 A (SHELL INT RESEARCH) 13 juin 1990 | 1,3,4 | G01N9/28 //G01F23/14 |
| A | * le document en entier * | 6 | |
| A | US 4 711 127 A (HAEFNER HANS W) 8 décembre 1987 * colonne 2, ligne 15 - ligne 22 * * colonne 2, ligne 64 - ligne 68 * * colonne 6, ligne 13 - colonne 7, ligne 50; revendications 26-31; figure 10 * | 1,3,4,6 | |
| A | FR 1 429 352 A (MECI MATERIEL ELECTRIQUE DE CONTROLE ET INDUSTRIEL) 13 mai 1966 * page 1, colonne 1, ligne 8 - ligne 30 * * page 2, colonne 1, ligne 27 - colonne 2; figures 1-3 * | 1,3 | |
| A | US 5 406 828 A (HUNTER ROBERT M ET AL) 18 avril 1995 * revendications 1,7,12; figures 7,8 * | 1-5,9 | |
| A | US 4 984 451 A (WILEN DON J ET AL) 15 janvier 1991 * le document en entier * | 1,3-9 | DOMAINES TECHNIQUES RECHERCHES (Int.Cl.6) G01N G01F |
| A | PATENT ABSTRACTS OF JAPAN vol. 017, no. 654 (P-1653), 3 décembre 1993 & JP 05 215660 A (HITACHI LTD;OTHERS: 01), 24 août 1993 * abrégé; figure 1 * | 1,3 | |
| A | COUSINS T: "FLUID DENSITY MEASUREMENT" MEASUREMENT AND CONTROL, vol. 25, no. 10, 1 décembre 1992, pages 292-296, XP000322332 * page 293, colonne 1, ligne 59 - colonne 2, ligne 21; figure 1 * | 1,3 | |

Le présent rapport a été établi pour toutes les revendications

| Lieu de la recherche | Date d'achèvement de la recherche | Examinateur |
|---|---|---|
| LA HAYE | 28 août 1998 | Koch, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)